# EUROPÄISCHE PATENTANMELDUNG

(11) **EP 1 890 068 A1**
(43) Veröffentlichungstag der Anmeldung: **20.02.2008**
(21) Anmeldenummer: 07112254.3
(22) Anmeldetag: 11.07.2007
(51) Int. Cl.: F16L 27/08

(54) **Drehdurchführung für ein unter hohem Druck stehendes Fluid**

(30) Priorität: 16.08.2006 DE 202006012531 U
(71) Anmelder: Hammelmann Maschinenfabrik GmbH, 59302 Oelde (DE)
(72) Erfinder: Jarchau, Michael, 59302 Oelde (DE); Oberscheidt, Martin, 59320 Ennigerloh (DE)
(74) Vertreter: Dantz, Jan Henning

(57) **Zusammenfassung**

Drehdurchführung für ein unter hohem Druck stehendes Fluid, mit einer drehbar gelagerten Hohlwelle (1), die mit einem Ende an einen Zulauf (4) anschließbar ist, über den in Funktion das Fluid durch die Hohlwelle (1) geführt wird, wobei in dem dem Zulauf (4) zugewandten Endbereich in der Hohlwelle (1) eine gegenüber dem Zulauf (4) feststehende, konzentrische Hülse (6) angeordnet ist, die von einer in einer Aufnahme (7) der Hohlwelle (1) gelagerten Dichtungseinheit (5), bestehend aus einem Dichtungsring (8) und einem sich stirnseitig daran abstützenden Stützring (9), umschlossen ist, wobei die aneinander liegenden Stirnseiten (10) des Dichtungsringes (8) und des Stützringes (9) plan ausgebildet sind.

## Beschreibung

Die Erfindung betrifft eine Drehdurchführung für ein unter hohem Druck stehendes Fluid entsprechend dem Oberbegriff des Anspruchs 1.

Derartige Drehdurchführungen kommen bspw. bei hydraulischen Werkzeugen in unterschiedlichsten Ausführungsvarianten zum Einsatz. Beispielhaft seien hier Düsennaben genannt, bei denen der Düsenkopf ein hydraulisches Strahlwerkzeug bildet. Dabei kann der Drehantrieb der Hohlwelle und des daran befestigten Düsenkopfes durch einen Rückstoß erfolgen, wozu unter einem bestimmten Winkel angeordnete Rückstoßdüsen vorgesehen sind. Denkbar ist aber auch einen externen Drehantrieb vorzusehen, wie er beispielsweise aus der DE 200 20 281 U1 bekannt ist.

Weiter sind Drehdurchführungen in Spritzbalken, Düsenlanzen oder Verbindungselementen wie Schläuchen oder Rohren bekannt.

Die Drehzahlen einer solchen Drehdurchführung liegen in einem Bereich von 1 bis 20000 min⁻¹, während das hindurchgeführte, ein Arbeitsmedium bildende Fluid mit einem Druck von 100 bis 4000 bar zum Einsatz kommt.

Dieses Fluid wird bei Gebrauch von einem stationären Zulauf in die Hohlwelle und darüber in z.B. einen Düsenkopf geführt, wobei im Übergangsbereich zwischen der Hohlwelle und dem Zulauf die Dichtungseinheit angeordnet ist, durch die der Eintauchbereich der Hülse in die Hohlwelle abgedichtet wird.

Dabei liegt die Dichtungseinheit, bestehend aus einem Dichtungsring und einem sich stirnseitig daran abstützenden Stützring, die beide die Hülse umschließen, in einer Aufnahme der Hohlwelle.

Die aneinander liegenden Stirnseiten des Dichtungsringes und des Stützringes, der üblicherweise aus einem Buntmetall, vorzugsweise Bronze, besteht, während der Dichtungsring aus einem Kunststoff gebildet ist, sind konisch ausgebildet, wobei die Stirnseite des Stützringes als Innenkonus und die zugeordnete Stirnseite des Dichtringes als Außenkonus gestaltet sind.

Aufgrund des beim Betrieb des Werkzeuges in der Hohlwelle herrschenden Innendrucks durch das Fluid, der auf der der konischen Stirnseite des Dichtungsringes gegenüberliegenden Stirnseite als Axialkraft wirksam ist, wirkt der Außenkonus des Dichtringes gegenüber dem Stützring wie ein Keil, wodurch eine Aufweitung eines zwischen der Hülse und dem Stützring vorhandenen Spaltes erfolgt.

Gleichzeitig kann es aufgrund des herrschenden Drucks zu einer Extrusion des Materials des Dichtungsringes in den Spalt kommen, so dass sich eine erhöhte Reibung durch den Abrieb und damit ein unruhiger Lauf ergibt, bis hin zum völligen Stillstand.

Ein hoher Verschleiß an der Hülse, einhergehend mit einer erheblichen Wärmeentwicklung durch die Reibung ist die Folge. Dies wird durch eine radiale Aufweitung der Hülse unter dem hohen Innendruck verstärkt, wodurch das extrudierte Material des Dichtungsringes im Spalt noch stärker gegen die begrenzenden Wandungen gedrückt und die Reibung erhöht wird.

Aus diesem Grund ist die Standzeit der bekannten Drehdurchführung relativ gering, so dass häufig teure Reparaturarbeiten erforderlich sind, zu denen sich kostensteigernd die Zeiten der Betriebsunterbrechung addieren.

Dies trifft gleichermaßen auf eine Konstruktion zu, bei der, um die genannten Probleme zu vermeiden, der Spalt zwischen dem aus dem weicherem Metall bestehenden Stützring und der aus dem demgegenüber härteren Metall bestehenden Hülse minimiert wurde. Hierbei kam es allerdings zu einem erhöhten Verschleiß des Stützringes, insbesondere durch ein Fressen.

Alles in allem stellen die bekannten Drehdurchführungen hinsichtlich eines wirtschaftlich optimierten Betriebs eine unbefriedigende Lösung dar.

Der Erfindung liegt daher die Aufgabe zugrunde, eine Drehdurchführung der gattungsgemäßen Art so weiterzuentwickeln, dass ihre Standzeit mit konstruktiv geringem Aufwand verbessert und die Betriebskosten insgesamt gesenkt werden.

Diese Aufgabe wird durch eine Drehdurchführung mit den Merkmalen des Anspruchs 1 oder 2 gelöst.

Durch die gemäß Anspruch 1 plane Ausbildung der aneinander liegenden Stirnseiten des Dichtungsringes und des Stützringes entfällt eine spaltvergrößernde Wirkung wie zum Stand der Technik mit den sich daraus ergebenden nachteiligen Folgen.

Bemerkenswert dabei ist, dass die neue Dichteinheit zwar zu einer wesentlich höheren Standzeit führt, diese jedoch mit geringem konstruktivem Aufwand erreichbar ist, d.h., dass die neue Drehdurchführung betriebswirtschaftlich optimiert ist.

Nach Anspruch 2 besteht der Stützring aus einem Sinterwerkstoff, einem Hartmetall oder aus Keramik. Vorzugsweise liegt die Härte dabei oberhalb 900 HV (Vickershärte).

Dadurch wird eine Verschleißbeständigkeit erreicht, durch die ein Laufspiel zwischen der Hülse und der Dichtungseinheit über die gesamte Betriebsdauer konstant bleibt. Dies wird auch erreicht, wenn die Drehdurchführung gemäß Anspruch 1 mit den Merkmalen des Anspruchs 2 ausgestaltet ist.

Zur Verschleißbeständigkeit trägt auch bei, dass nach einem weiteren Gedanken der Erfindung die Hülse auf ihrer Mantelfläche mit einer Hartstoffbeschichtung versehen ist, die zusammen mit dem harten Material des Stützringes einen zuverlässigen Betrieb im Trockenlauf, d.h., bei leckagefreiem Lauf gewährleistet.

Dabei muss die Schicht der Hülse neben der auf das Material des Stützringes abgestimmten Härte eine ausreichende Elastizität aufweisen, um eine Aufdehnung der Hülse, die, wie erwähnt, durch den hohen herrschenden Innendruck erfolgt, ohne Rissbildung zu ertragen. Vorzugsweise besteht die Schicht bzw. der Schichtwerkstoff aus einer Oxidkeramik oder einem Hartmetall, die durch Spritztechnik oder im CVD-Verfahren (Chemische-Gasphasen-Abscheidung) aufgebracht ist.

Weitere vorteilhafte Ausbildungen der Erfindung sind in den Unteransprüchen gekennzeichnet. Ein Ausführungsbeispiel der Erfindung wird nachfolgend anhand der beigefügten Zeichnungen beschrieben.

Es zeigen:
- Figur 1: einen Längsschnitt durch eine entsprechend der Erfindung ausgebildete Drehdurchführung eines drehbaren hydraulischen Werkzeuges
- Figur 2: einen vergrößerten Teilausschnitt des Werkzeuges, gemäß der Kennzeichnung II in Figur 1.

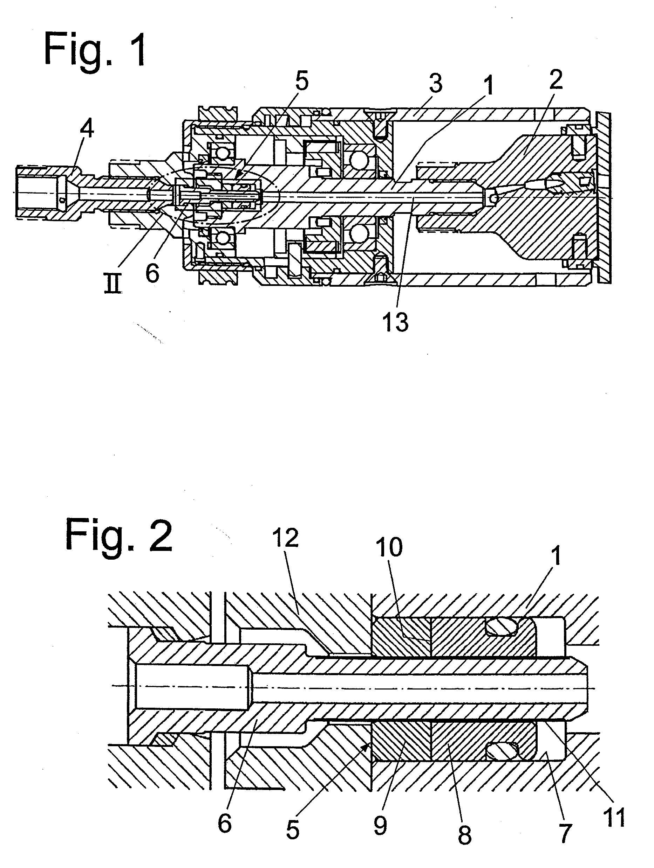

In der Figur 1 ist ein drehbares hydraulisches Werkzeug dargestellt, das ein einen wesentlichen Teil der erforderlichen Bauteile aufnehmendes Gehäuse 3 aufweist.

Dieses Gehäuse 3 umschließt eine drehbar gelagerte Hohlwelle 1, die an einem Ende einen Düsenkopf 2 trägt, aus dem bei Betrieb ein fluides Medium unter hohem Druck austritt, das von einem stationären Zulauf 4 über die Hohlwelle 1 zugeführt wird, wobei die Hohlwelle 1 einen zentrischen, sich axial erstreckenden Kanal 13 zur Durchführung des Fluidums aufweist.

An dem dem Düsenkopf 2 abgewandten Ende ist die Hohlwelle 1 mit einer konzentrischen Aufnahme 7 versehen, in der eine Dichtungseinheit 5 angeordnet ist. Diese besteht aus einem Dichtungsring 8 aus Kunststoff und einem Stützring 9, aus einem harten Sinterwerkstoff, vorzugsweise Hartmetall oder Keramik.

Während sich der Stützring 9 im Betrieb mit einer Stirnseite an einem fest mit der Hohlwelle 1 verbundenen Halter 12 abstützt, der die Aufnahme 7 auf der dem Düsenkopf 2 abgewandten Seite abschließt, liegt der Stützring 9 mit seiner anderen Stirnseite am Dichtring 8 an. Erfindungsgemäß sind beide Stirnseiten 10 als plane Flächen ausgebildet und erstrecken sich quer zur Längsachse der Hohlwelle 1.

In der Dichtungseinheit 5 ist eine Hülse 6 geführt, die zumindest im Überdeckungsbereich mit dem Dichtring 8 und dem Stützring 9 mit einer Beschichtung 11 aus einem Hartstoff versehen ist. Dabei ist die Hülse 6, durch die das unter hohem Druck stehende Fluid vom Zulauf 4 in die Hohlwelle 1 geführt wird, starr angeordnet, d.h., im Gegensatz zur Hohlwelle 1 ist die Hülse 6 nicht drehbar im Gehäuse 3 gelagert.

Im übrigen ist die Dichtungseinheit 5 in der Aufnahme 7 so positioniert, dass sie gegenüber der Hülse 6 axial verschiebbar ist und durch den in der Hohlwelle vorherrschenden Innendruck bei Betrieb des Werkzeuges gegen den Halter 12 gepresst wird.

### Bezugszeichenliste

- 1: Hohlwelle
- 2: Düsenkopf
- 3: Gehäuse
- 4: Zulauf
- 5: Dichtungseinheit
- 6: Hülse
- 7: Aufnahme
- 8: Dichtring
- 9: Stützring
- 10: Stirnfläche
- 11: Schicht
- 12: Halter
- 13: Kanal

## Patentansprüche

1. Drehdurchführung für ein unter hohem Druck stehendes Fluid, mit einer drehbar gelagerten Hohlwelle (1), die mit einem Ende an einen Zulauf (4) anschließbar ist, über den in Funktion das Fluid durch die Hohlwelle (1) geführt wird, wobei in dem dem Zulauf (4) zugewandten Endbereich in der Hohlwelle (1) eine gegenüber dem Zulauf (4) feststehende, konzentrische Hülse (6) angeordnet ist, die von einer in einer Aufnahme (7) der Hohlwelle (1) gelagerten Dichtungseinheit (5), bestehend aus einem Dichtungsring (8) und einem sich stirnseitig daran abstützenden Stützring (9), umschlossen ist, **dadurch gekennzeichnet, dass** die aneinander liegenden Stirnseiten (10) des Dichtungsringes (8) und des Stützringes (9) plan ausgebildet sind.

2. Drehdurchführung nach Anspruch 1 oder dem Oberbegriff des Anspruchs 1, **dadurch gekennzeichnet, dass** der Stützring (9) aus einem harten Sinterwerkstoff, Hartmetall oder Keramik besteht.

3. Drehdurchführung nach Anspruch 1 oder 2, **dadurch gekennzeichnet, dass** die Härte des Materials des Stützringes (9) > 900 HV ist.

4. Drehdurchführung nach einem der vorhergehenden Ansprüche, **dadurch gekennzeichnet, dass** die Hülse (6) zumindest im Überdeckungsbereich mit der Dichtungseinheit (5) mit einer harten Beschichtung (11) versehen ist.

5. Drehdurchführung nach einem der vorhergehenden Ansprüche, **dadurch gekennzeichnet, dass** die Beschichtung (11) soweit elastisch ist, dass eine durch einen herrschenden Innendruck gegebene radiale Dehnung der Hülse (6) rissfrei bleibt.

6. Drehdurchführung nach einem der vorhergehenden Ansprüche, **dadurch gekennzeichnet, dass** die Beschichtung (11) durch Aufspritzen oder im CVD-Verfahren aufgebracht ist.

7. Drehdurchführung nach einem der vorhergehenden Ansprüche, **dadurch gekennzeichnet, dass** die Beschichtung (11) aus einer Oxidkeramik oder einem Hartmetall besteht.
